(19) Europäisches Patentamt / European Patent Office / Office européen des brevets

(11) **EP 4 645 463 A1**

(12) **EUROPEAN PATENT APPLICATION**

(43) Date of publication:
**05.11.2025 Bulletin 2025/45**

(21) Application number: **25171777.3**

(22) Date of filing: **22.04.2025**

(51) International Patent Classification (IPC):
**H01M 4/36** (2006.01)  **H01M 4/13** (2010.01)
**H01M 4/505** (2010.01)  **H01M 4/525** (2010.01)
**H01M 10/0525** (2010.01)  **H01M 4/02** (2006.01)

(52) Cooperative Patent Classification (CPC):
**H01M 4/13; H01M 4/364; H01M 4/505;
H01M 4/525; H01M 10/0525;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.04.2024 KR 20240056155**

(71) Applicant: **SAMSUNG SDI CO., LTD.
Yongin-si, Gyeonggi-do 17084 (KR)**

(72) Inventors:
• **KIM, Young-Ki**
  **Yongin-si (KR)**
• **CHOI, Aram**
  **Yongin-si (KR)**
• **KIM, Sangmi**
  **Yongin-si (KR)**
• **DOO, Sungwook**
  **Yongin-si (KR)**
• **KANG, Gwiwoon**
  **Yongin-si (KR)**
• **LEE, Soonrewl**
  **Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, METHOD FOR PREPARING THE SAME, AND RECHARGEABLE LITHIUM BATTERY INCLUDING THE SAME**

(57)    Positive electrode active materials for a rechargeable battery, methods for preparing the same, and rechargeable lithium batteries including the same are disclosed. A positive electrode active material includes a first particle including a compound represented by Chemical Formula 1, and a second particle including a compound represented by Chemical Formula 2. Here, the Mn content (e.g., amount) of Chemical Formula 2 is 1 to 5 times the Mn content (e.g., amount) of Chemical Formula 1 based on 100 mol% of transition metals (e.g., all metals excluding lithium).

FIG. 6

**EP 4 645 463 A1**

**Description**

**BACKGROUND**

**(a) Field**

The present disclosure herein relates to a positive electrode active material for a rechargeable lithium battery, a method for preparing the positive electrode active material, and a rechargeable lithium battery including the positive electrode active material, for example, to a positive electrode active material including an olivine-based lithium compound, a method for preparing the a positive electrode active material including the olivine-based lithium compound, and a rechargeable lithium battery including the positive electrode active material including the olivine-based lithium compound.

**(b) Description of the Related Art**

Recently, with the rapid spread of electronic devices that use batteries (e.g., that are battery-operated), such as mobile phones and/or laptop computers, and/or electric vehicles, the demand for rechargeable batteries with relatively high energy density and high capacity is rapidly increasing. Accordingly, research and development to improve the performance of rechargeable lithium batteries is being actively conducted.
A rechargeable lithium battery is a battery including a positive electrode and a negative electrode, each containing active materials capable of intercalation and deintercalation of lithium ions, and an electrolyte. The rechargeable lithium battery produces electrical energy through the oxidation and reduction reactions when lithium ions are intercalated into and deintercalated from the positive and negative electrodes.

**SUMMARY**

An aspect according to one or more embodiments of the present disclosure is directed toward a positive electrode active material with (having) high energy density, high operating voltage, and high conductivity.
An aspect according to one or more embodiments of the present disclosure is directed toward a rechargeable lithium battery with (having) high energy density, high operating voltage, and enhanced (excellent or suitable) low-temperature properties.
Additional aspects will be set forth in part in the description which follows and, in part, will be apparent from the description, or may be learned by practice of the presented embodiments of the disclosure.
According to one or more embodiments of the disclosure, a positive electrode active material includes a first particle including a compound represented by Chemical Formula 1, and a second particle including a compound represented by Chemical Formula 2.

$$\text{Chemical Formula 1} \qquad Li_{a1}Mn_{x1}Fe_{y1}M_{z1}PO_{4-b1}$$

In Chemical Formula 1, $0.8 \leq a1 \leq 1.2$, $0.1 \leq x1 \leq 0.2$, $0.8 < y1 \leq 0.9$, $0.001 \leq z1 \leq 0.05$, $0 \leq b1 \leq 0.05$, $x1 + y1 + z1 = 1$, and M is at least one element selected from the group consisting of transition metals having an oxidation number of 4.

$$\text{Chemical Formula 2} \qquad Li_{a2}Ni_{x2}Co_{y2}Mn_{z2}X_{c2}O_{2-b2}$$

In Chemical Formula 2, $0.8 \leq a2 \leq 1.2$, $0.5 \leq x2 \leq 0.8$, $0 < y2 \leq 0.3$, $0.1 \leq z2 \leq 0.5$, $0 < c2 \leq 0.05$, $0 \leq b2 \leq 0.05$, $x2 + y2 + z2 + c2 = 1$, and X is at least one element selected from the group consisting of Al, Ti, Mg, Zr, Mo and Nb.
Here, the Mn content (e.g., amount) of Chemical Formula 2 may be 1 to 5 times the Mn content (e.g., amount) of Chemical Formula 1 on the basis of about 100 mol% of transition metals (e.g., all metals excluding lithium) in the first particle and the second particle.
At least some of the above and other features of the invention are set out in the claims.

**BRIEF DESCRIPTION OF THE DRAWINGS**

The accompanying drawings are included to provide a further understanding of the disclosure, and are incorporated in and constitute a part of this specification. The drawings illustrate embodiments of the disclosure and, together with the description, serve to explain principles of the disclosure.

FIG. 1 illustrates a simplified conceptual diagram showing a rechargeable lithium battery according to one or more embodiments of the disclosure.

FIG. 2 is a schematic illustration of a cylindrical battery according to one or more embodiments of the disclosure.

FIG. 3 is a schematic illustration of a prismatic battery according to one or more embodiments of the disclosure.

FIG. 4 is a schematic illustration of a pouch-type or kind battery according to one or more embodiments of the disclosure.

FIG. 5 is a schematic illustration of a pouch-type or kind battery according to one or more embodiments of the disclosure.

FIG. 6 illustrates an enlarged view of a positive electrode active material layer of a rechargeable lithium battery according to one or more embodiments of the disclosure.

FIG. 7 illustrates a flow chart showing a method of manufacturing a positive electrode active material according to one or more embodiments of the disclosure.

FIG. 8A shows scanning electron microscope (SEM) images of a positive electrode active material according to one or more embodiments of the disclosure.

FIG. 8B shows SEM images of a positive electrode active material according to one or more embodiments of the disclosure.

FIG. 8C shows SEM images of a positive electrode active material according to one or more embodiments of the disclosure.

## DETAILED DESCRIPTION

In order to sufficiently understand the configuration and effect of the disclosure, one or more embodiments of the disclosure will be described with reference to the accompanying drawings. It should be noted, however, that the disclosure is not limited to the following example embodiments, and may be implemented in one or more suitable forms. Rather, the example embodiments are provided only to let those skilled in the art fully understand the scope of the disclosure.

In this description, it will be understood that, if (e.g., when) an element is referred to as being "on" another element, the element can be directly on the other element or intervening elements may be present therebetween. In the drawings, thicknesses of some components are exaggerated for effectively explaining the technical contents. Like reference numerals refer to like elements throughout, and duplicative descriptions thereof may not be provided in the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product of the constituents.

Unless otherwise especially defined in this description, a particle diameter may be an average particle diameter. Also, a particle diameter may refer to an average particle diameter (D50), which refers to the diameter of particles at a cumulative volume of about 50 vol% in a particle size distribution. The average particle diameter (D50) may be measured by a suitable method (e.g., known to those skilled in the art), for example, by a particle size analyzer, or by using a transmission electron microscope (TEM) image or a scanning electron microscope (SEM) image. In one or more embodiments, the average particle diameter may be measured by a measurement device using dynamic light-scattering, wherein data analysis is conducted to count the number of particles for each particle size range, and an average particle diameter (D50) value may then be obtained through calculation. In one or more embodiments, a laser scattering method may be utilized to measure the average particle diameter. In the laser scattering method, target particles are dispersed in a dispersion medium, then, introduced into a commercial laser diffraction particle-diameter measurement instrument (e.g., MT3000 of Microtrac), and irradiated with ultrasonic waves of about 28 kHz at an output of about 60 W, and the average particle diameter (D50) based on about 50% of particle diameter distribution may be calculated in the measurement instrument.

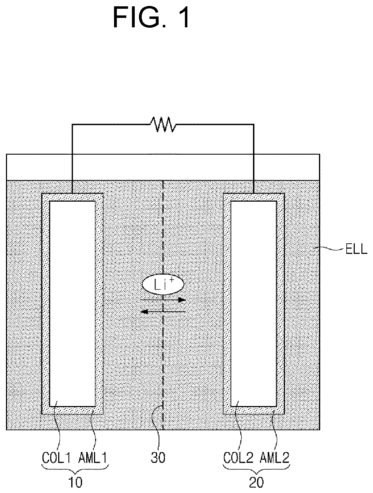

FIG. 1 is a simplified conceptual diagram of a rechargeable lithium battery according to one or more embodiments of the disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

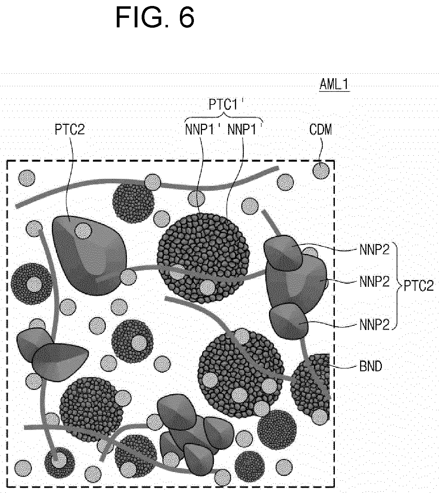

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material (e.g., electron conductor). Detailed description on the positive electrode active material layer AML1 according to one or more embodiments of the disclosure will be explained in more detail later with reference to FIG. 6. Al may be used as the current collector COL1, but the disclosure is not limited thereto.

**Negative Electrode 20**

The negative electrode 20 for a rechargeable lithium battery may include a current collector COL2, and a negative electrode active material layer AML2 on the current collector COL2. The negative electrode active material layer AML2 may include a negative electrode active material and may further include a binder and/or a conductive material.

For example, the negative electrode active material layer AML2 may include about 90 wt% to about 99 wt% of the negative electrode active material, about 0.5 wt% to about 5 wt% of the binder, and about 0 wt% to about 5 wt% of the conductive material, each based on 100 wt% of the negative electrode active material layer AML2.

The binder may serve to attach the negative electrode active material particles (e.g., well) to each other and also to attach the negative electrode active material (e.g., well) to the current collector COL2. The binder may include a non-aqueous binder (e.g., binder in a non-aqueous solution), an aqueous binder (e.g., binder in a water solution), a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the negative electrode binder, a cellulose-based compound capable of imparting (e.g., providing suitable) viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous (e.g., capable of being formed into the shape of a fiber). For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity to the electrode. Any suitable material that does not cause chemical change and is an electron conductive material may be used in the battery. Examples of the conductive material may include: a carbon-based material such as natural graphite, artificial graphite, carbon black, acetylene black, Ketjenblack, a carbon fiber, a carbon nanofiber, and/or carbon nanotube; a metal-based material including copper, nickel, aluminium, silver, and/or the like., in a form of a metal powder or a metal fiber; a conductive polymer such as a polyphenylene derivative; and/or a (e.g., any suitable) mixture thereof.

The current collector COL2 may use a copper foil, a nickel foil, a stainless steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped (e.g., irregularly shaped), sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping into and de-doping from lithium may be a Si-based negative electrode active material or a Sn-based negative electrode active material. The Si-based negative electrode active material may include silicon, a silicon-carbon composite, SiOx (0 < x ≤ 2), a Si-Q alloy (where Q is selected from among an alkali metal, an alkaline earth metal, a Group 13 element, a Group 14 element (excluding Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, $SnO_x$ (0 < x ≤ 2, e.g., $SnO_2$), a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core), in which primary silicon particles are assembled (agglomerated), and an amorphous carbon coating layer (shell) on the surface of the secondary particle. The amorphous carbon may also be between the primary silicon particles, for example, the primary silicon particles may be coated with the amorphous carbon. The secondary particle may exist (e.g., in a state of) dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may be a single layered film that includes polyethylene, polypropylene, or polyvinylidene fluoride, a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., Teflon), or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2Fs)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are each integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

**Rechargeable Lithium Battery**

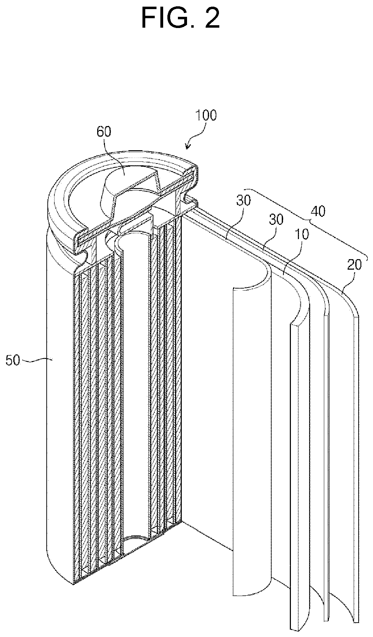

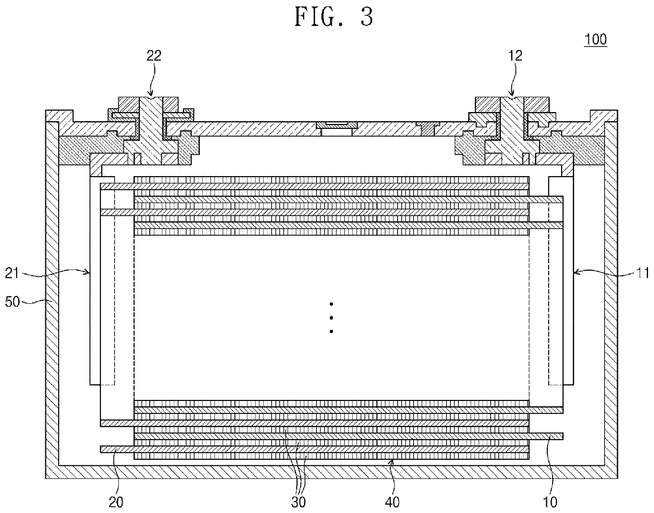

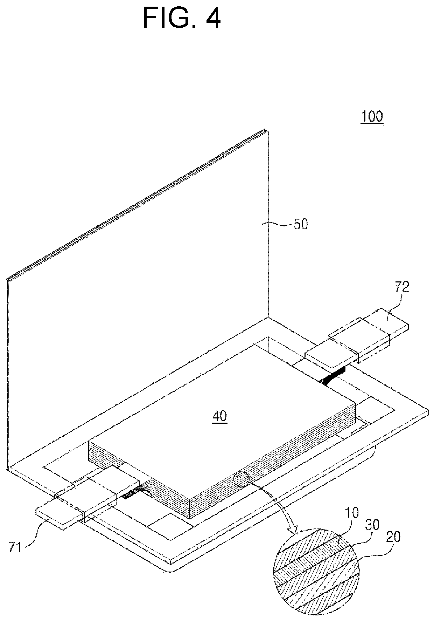

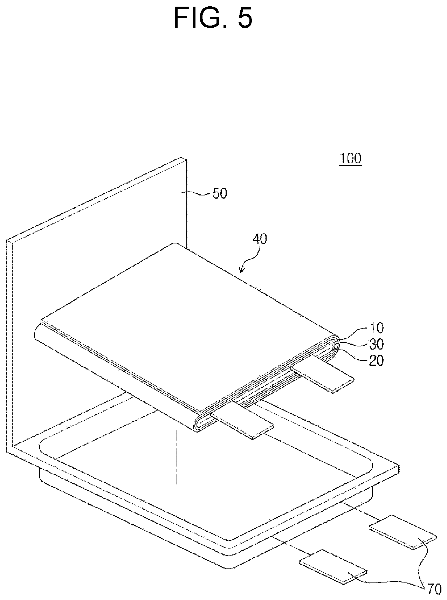

The rechargeable lithium battery may be classified into cylindrical, prismatic, pouch, coin-type (kind) batteries, and/or the like depending on their shape. FIGS. 2 to 5 are schematic views illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included (e.g., enclosed). The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may include, for example, a positive electrode tab 71 and a negative electrode tab 72 serving as an electrical path for inducing (e.g., conducting) the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 illustrates an enlarged view showing a positive electrode active material layer of a rechargeable lithium battery according to one or more embodiments of the disclosure. Referring to FIG. 6, the positive electrode active material layer AML1 (see FIG. 1) may include a first particle PTC1', a second particle PTC2, a conductive material CDM, and a binder BND. A plurality of the first particles PTC1 and a plurality of the second particles PTC2 constitutes a positive electrode active material according to one or more embodiments of the disclosure. That is, the positive electrode active material (in positive electrode active material layer AML1) according to one or more embodiments includes (or consists of) the plurality of the first particles PTC1' and the plurality of the second particles PTC2.

The positive electrode active material layer AML1 may further include an additive that may serve as a sacrificial positive electrode.

The content (e.g., amount) of the positive electrode active material (PTC1 and PTC2) in the positive electrode active material layer AML1 may range from about 90 wt% to about 99.5 wt% relative to 100 wt% of the positive electrode active material layer AML1. Each of the contents of the binder BND and the conductive material CDM may each be about 0.5 wt% to about 5 wt% relative to 100 wt% of the positive electrode active material layer AML1.

The binder BND may combine the first particles PTC1, the second particles PTC2, and the conductive material CDM with each other. For example, the binder BND may include at least one selected from among (e.g., selected from the group consisting of) polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the disclosure is not limited thereto.

The conductive material CDM may be used to improve conductivity of the positive electrode active material layer AML1. Any suitable conductive material that does not cause a chemical change of the positive electrode active material layer AML1 may be used without limitation as the conductive material CDM. For example, the conductive material CDM may include: a carbon-based material such as natural graphite, artificial graphite, carbon black, acetylene black, Ketjenblack, carbon fiber, carbon nano-fiber, and/or carbon nano-tube; a metal-based material containing copper, nickel, aluminium, silver and/or the like and having a metal powder or metal fiber form; a conductive polymer such as a polyphenylene derivative; and/or a (e.g., any suitable) mixture thereof.

Hereinafter, each of the first particle PTC1' and the second particle PTC2 will be explained in more detail.

**First Particle PTC1'**

Referring to FIG. 6, the first particle PTC1' according to one or more embodiments of the disclosure may have a polycrystal form and may include a secondary particle in which at least two or more first primary particles NNP1' are agglomerated. For example, one first particle PTC1' may include a plurality of first primary particles NNP1' agglomerated with each other. The first particle PTC1' may have a spherical or elliptical shape.

The first particles PTC1' in a polycrystal form may be provided in one or more suitable sizes. For example, the average particle diameter of the first particles PTC1' may be about 3 μm to about 10 μm. For example, the average particle diameter of the first particles PTC1' may be about 3 μm to about 7 μm, or about 4 μm to about 6 μm.

In one or more embodiments, the average particle diameter may be measured by a particle size analyzer. The average particle diameter may refer to the diameter of particles at an accumulated volume of about 50 vol% (D50) in a particle size distribution.

The minimum (e.g., smallest) particle diameter of the first particles PTC1' in a polycrystal form, that is, the particle diameter of the first primary particles NNP1' may be about 50 nm to about 150 nm.

In one or more embodiments, the minimum (e.g., smallest) particle diameter, that is, the particle diameter of the first primary particles NNP1' may refer to the diameter measured by randomly selecting about 30 first primary particles NNP1' on an electron microscope image of the first particles PTC1'.

In one or more embodiments, the first particle PTC1' may include a first coating layer on the surface thereof. The first coating layer may cover the entire surface of the first particle PTC1' or may cover a portion of the surface of the first particle PTC1'. For example, the first coating layer may include carbon and/or a carbon-containing compound. The first coating layer may further include at least one selected from among (e.g., selected from the group consisting of) a titanium-containing compound, a magnesium-containing compound and a vanadium-containing compound. The metal-containing compound such as the titanium-containing compound, the magnesium-containing compound and/or the vanadium-containing compound may be, for example, a metal oxide, a metal hydroxide, a metal carbonate, a synthesized compound thereof and/or a (e.g., any suitable) mixture thereof. The metal-containing compound may further include other metal or non-metal elements. For example, the metal-containing compound may further include lithium. The first particle PTC1' may show improved structural stability and improved electrical conductivity due to the first coating layer.

In one or more embodiments, the first particle PTC1' may further include a grain boundary coating layer on the surface of each of the first primary particles NNP1'. The grain boundary coating layer may be present in (e.g., inside) the first particle PTC1'. The grain boundary coating layer may be formed along the interface between the first primary particles NNP1' inside the first particle PTC1'. For example, the grain boundary coating layer may refer to a material coated on the grain boundary in (e.g., coated on the surface of) the first particle PTC1'. The grain boundary coating layer may include carbon and/or a carbon-containing compound. The grain boundary coating layer may further include at least one selected from among (e.g., selected from the group consisting of) a titanium-containing compound, a magnesium-containing compound and a vanadium-containing compound.

The interior (e.g., inside) of the above-described first particle PTC1' may refer to the entire interior of the first particle PTC1' excluding the surface of the first particle PTC1'. For example, the interior of the first particle PTC1' may refer to an entire interior from a depth of about 10 nm from the surface of the first particle PTC1', or a region from a depth of about 10 nm to a depth of about 2 μm. For example, the interior or the inside of the first particle PTC1' may refer to an entire remaining region of the first particle PTC1' after excluding the region from the outer surface to about 10 nm depth from the outer surface of the first particle PTC1', or a region from about 10 nm depth to about 2 μm depth from the outer surface of the first particle PTC1'.

Because the first particle PTC1' further includes the grain boundary coating layer, structural stability may be reinforced, and a substantially uniform coating layer may be formed on the surface of the first particle PTC1'. In addition, because the first particle PTC1' further includes the grain boundary coating layer, the electrical conductivity of the first particle PTC1' may be further improved.

In the first particle PTC1' in a polycrystal form, the first primary particles NNP1' are closely agglomerated, and may show the following properties. The first particle PTC1' may have a spherical shape or an elliptical shape. The porosity of the first particles PTC1' may be about 20% to about 40% (e.g. about 20% to about 30%). The span value of the first particles PTC1' analyzed by a particle size analyzer may be about 0.3 to about 0.75. The "span" value may refer to a value obtained by dividing a difference between D90 and D10 by D50 (i.e., (D90-D10)/D50), in which D10, D50 and D90 represent the size of particles at a cumulative volume of about 10 vol%, 50 vol% and 90 vol% in a particle size distribution, respectively. Here, porosity (n) may be defined as the pore volume (Vp) divided by the total volume (Vt) of the first particle, or

$$n = \frac{V_p}{V_t}.$$

If the first particle PTC1' is a secondary particle in a polycrystal form, the average particle diameter is large, and a relatively small amount of a binder BND may be desired or required to attach the first particles PTC1' to a current collector COL1 (see FIG. 1). For example, the content (e.g., amount) of the binder BND may be about 0.5 wt% to about 3 wt% based on 100 wt% of a positive electrode active material layer AML1. If the binder content (e.g., amount) contained in the positive electrode active material layer AML1 is reduced, the content (e.g., amount) of the active material may be increased correspondingly, thereby improving the capacity and energy density of a battery. Additionally, the electrical conductivity of the positive electrode may be improved by reducing the binder content (e.g., amount) that increases resistance.

The first particle PTC1' may include an olivine-based lithium compound represented by Chemical Formula 1.

Chemical Formula 1 $\qquad Li_{a1}Mn_{x1}Fe_{y1}M_{z1}PO_{4-b1}$

In Chemical Formula 1, $0.8 \leq a1 \leq 1.2$, $0.1 \leq x1 \leq 0.2$, $0.8 < y1 \leq 0.9$, $0.001 \leq z1 \leq 0.05$, $0 \leq b1 \leq 0.05$, and $x1 + y1 + z1 = 1$ may be satisfied. M is at least one element selected from among (e.g., selected from the group consisting of) transition metals having an oxidation number of 4. M may be a dopant doped in the first particle PTC1'. For example, M may include Ti. In Chemical Formula 1, y1 may also satisfy the following expressions: $0.8 \leq y1 \leq 0.9$ or $0.8 - z1 \leq y1 \leq 0.9 - z1$.

Through Ti-doping, the size of the first primary particles NNP1' may be controlled or selected to be substantially uniform and the charge and discharge efficiency, low-temperature properties and lifetime characteristics of a rechargeable lithium battery may be improved. In addition, through the Ti-doping, the crystal structure of the positive electrode active material may be stabilized and the lifetime characteristics of a battery may be improved.

The Mn content (e.g., amount) included in the first particle PTC1' may be about 10 mol% to about 20 mol% based on 100 mol% of transition metals (e.g., all metals excluding lithium) in the compound represented by Chemical Formula 1. The Mn content (e.g., amount) included in the first particle PTC1' may be, for example, about 12 mol% or more, or about 14 mol% or more. The Mn content (e.g., amount) included in the first particle PTC1' may be, for example, about 18 mol% or less, or about 16 mol% or less. If the Mn content (e.g., amount) in the first particle PTC1' satisfies these ranges, a positive electrode active material including the first particle PTC1' may be structurally stable at a high voltage, and capacity, resistance and lifetime characteristics all may be improved.

The Fe content (e.g., amount) included in the first particle PTC1' may be about 80 mol% to about 90 mol% based on 100 mol% of transition metals (e.g., all metals excluding lithium) in the compound represented by Chemical Formula 1. The Fe content (e.g., amount) included in the first particle PTC1' may be, for example, about 82 mol% or more, or about 84 mol% or more. The Fe content (e.g., amount) included in the first particle PTC1' may be, for example, about 88 mol% or less, or about 86 mol% or less. If the Fe content (e.g., amount) in the first particle PTC1' satisfies these ranges, a positive electrode active material including the first particle PTC1' may be structurally stable at a high voltage, and capacity, resistance and lifetime characteristics all may be improved.

The Ti content (e.g., amount) included in the first particle PTC1' may be about 0.1 mol% to about 5 mol% based on 100 mol% of transition metals (e.g., all metals excluding lithium) in the compound represented by Chemical Formula 1. The Ti content (e.g., amount) included in the first particle PTC1' may be, for example, about 0.2 mol% or more, or about 0.3 mol% or more. The Ti content (e.g., amount) included in the first particle PTC1' may be, for example, about 1 mol% or less, or about 0.5 mol% or less. If the Ti content (e.g., amount) in the first particle PTC1' satisfies these ranges, the size of the first primary particles NNP1' may be controlled or selected to be substantially uniform, and the charge and discharge efficiency, low-temperature properties and lifetime characteristics of a rechargeable lithium battery may be improved. If the Ti content (e.g., amount) in the first particle PTC1' satisfies these ranges, the Ti-doping may stabilize the crystal structure of the positive electrode active material, and the lifetime characteristics of a battery may be improved.

The first particle PTC1' may further include carbon derived from the first coating layer and/or the grain boundary coating layer. The carbon element content (e.g., amount) in the first particle PTC1' may be about 0.5 wt% to about 10 wt%, about 1 wt% to about 3 wt%, or about 1.5 wt% to about 2.5 wt% based on 100 wt% of the first particle PCT1'.

## Second Particle PTC2

Referring to FIG. 6, the second particle PTC2 may have a single particle form. In the description, the single particle may refer to a sole particle (e.g., one particle or an individual particle) that does not have a grain boundary or an interface inside. The single particle has a morphology phase, and may refer to a single (e.g., one) particle, a monolith structure, a monolithic structure, or a non-agglomerated particle in which each of the particles exist as an independent phase that are not agglomerated. For example, the single particle may be a single crystal. In one or more embodiments, the single particle may be a particle containing several crystals. That is, the single particle may have a single crystal or a polycrystalline structure. The single particle may be in a solely separated form, e.g., may not be agglomerated with another particle. In one or more embodiments, the second particle PTC2 may be in the form of a cluster of 2 to 100 single particles attached to each other. Unlike the secondary particles discussed with respect to the first particle PTC1', such a cluster of particles usually or substantially does not have a spherical, oval or elliptical shape, and instead is irregularly shaped with the particles randomly grouped together.

The second particles PTC2 may be a positive electrode active material in a nano type (kind) (e.g., nano-sized particle). The second particle PTC2 may include at least one second primary particle NNP2. In one or more embodiments, the second primary particles NNP2 may be attached to have a non-spherical particle shape (or a shape close to a spherical shape). Though the second primary particles NNP2 are attached, the second particle PTC2 may not have a spherical shape. For example, the second particle PTC2 may have a random or irregular shape.

The second particles PTC2 in a single particle form may be provided in one or more suitable sizes. For example, the average particle diameter of the second particles PTC2 may be about 3 $\mu$m to about 5 $\mu$m.

In one or more embodiments, the average particle diameter may be measured using a particle size analyzer. The average particle diameter may refer to a diameter (D50) of particles at an accumulated volume of about 50 vol% in a particle size distribution.

The minimum particle diameter of the second particles PTC2, i.e., the particle diameter of the second primary particles NNP2, may be about 200 nm to about 500 nm.

In one or more embodiments, the minimum particle diameter, i.e., the particle diameter of the second primary particle NNP2, may refer to a diameter measured by randomly selecting about 30 second primary particles NNP2 in the electron microscope image of the second particles PTC2.

In one or more embodiments, the second particle PTC2 may include a second coating layer on the surface thereof. By including the second coating layer, the second particle PTC2 may effectively suppress or reduce structural collapse due to repeated charging and discharging. Accordingly, the lifetime characteristics of a rechargeable battery may be improved.

The second coating layer may include a boron-containing compound, an aluminium-containing compound and/or a (e.g., any suitable) combination thereof. The metal-containing compound in the second coating layer may be, for example, a metal oxide, a metal hydroxide, a metal carbonate, a synthesized compound thereof and/or a (e.g., any suitable) mixture thereof. The metal-containing compound may further include other metal or nonmetal elements. For example, the second coating layer may further include lithium, manganese, and/or nickel.

A method for measuring the metal content (e.g., amount) in the second coating layer of the second particle PTC2 may include performing scanning electron microscopy-energy dispersive X-ray spectroscopy (SEM-EDS) on the second particles PTC2. Through the analysis, the contents of boron and/or aluminium in the second coating layer may be obtained (or confirmed). As a method for measuring the metal content (e.g., amount) in the second coating layer, an inductively coupled plasma-mass spectrometry (ICP-MS), an inductively coupled plasma optical emission spectroscopy (ICP-OES) and/or the like may be used in addition to the SEM-EDS.

The second particle PTC2 includes a lithium nickel-based composite oxide as a nickel-based active material. For example, the second particle PTC2 may include a nickel-based positive electrode active material containing a high content (e.g., amount) of nickel. The nickel-based positive electrode active material may achieve high capacity and high performance.

The porosity of the second particles PTC2 may be greater than about 40%. The span value of the second particles PTC2, measured by a particle size analyzer, may be deviated from (e.g. outside) a range of about 0.3 to about 0.75.

For example, the second particle PTC2 may include a lithium nickel-based composite oxide with a layered structure, represented by Chemical Formula 2.

$$\text{Chemical Formula 2} \qquad Li_{a2}Ni_{x2}Co_{y2}Mn_{z2}X_{c2}O_{2-b2}$$

In Chemical Formula 2, $0.8 \leq a2 \leq 1.2$, $0.5 \leq x2 \leq 0.8$, $0 < y2 \leq 0.3$, $0.1 \leq z2 \leq 0.5$, $0 < c2 \leq 0.05$, $0 \leq b2 \leq 0.05$ (e.g., $0 < b2 \leq 0.05$), and $x2 + y2 + z2 + c2 = 1$ are satisfied. X is at least one element selected from among (e.g., selected from the group consisting of) Al, Ti, Mg, Zr, Mo and Nb. X may be a dopant doped in the second particle PTC2.

The Mn content (e.g., amount) included in the second particle PTC2 may be about 10 mol% to about 50 mol% based on 100 mol% of transition metals (e.g., all metals excluding lithium) in the compound represented by Chemical Formula 2. The Mn content (e.g., amount) included in the second particle PTC2 may be, for example, about 20 mol% or more, or about 25 mol% or more. The Mn content (e.g., amount) included in the second particle PTC2 may be, for example, about 40 mol% or less, or about 35 mol% or less. If the Mn content (e.g., amount) in the second particle PTC2 satisfies these ranges, a positive electrode active material including thereof may be structurally stable at a high voltage, and capacity, resistance and lifetime characteristics all may be improved.

The Ni content (e.g., amount) included in the second particle PTC2 may be about 50 mol% to about 80 mol% based on 100 mol% of transition metals (e.g., all metals excluding lithium) in the compound represented by Chemical Formula 2. The Ni content (e.g., amount) included in the second particle PTC2 may be, for example, about 55 mol% or more. The Ni content (e.g., amount) included in the second particle PTC2 may be, for example, about 70 mol% or less, or about 65 mol% or less. If the Ni content (e.g., amount) in the second particle PTC2 satisfies these ranges, a positive electrode active material including thereof may exhibit improved capacity, resistance and lifetime characteristics all.

The Co content (e.g., amount) included in the second particle PTC2 may be greater than about 0 mol% to about 30 mol% based on 100 mol% of transition metals (e.g., all metals excluding lithium) in the compound represented by Chemical Formula 2. The Co content (e.g., amount) included in the second particle PTC2 may be, for example, about 1 mol% or more, or about 5 mol% or more. The Co content (e.g., amount) included in the second particle PTC2 may be, for example, about 20 mol% or less, or about 15 mol% or less. If the Co content (e.g., amount) in the second particle PTC2 satisfies these ranges, capacity, resistance and lifetime characteristics all may be improved for a positive electrode active material including the same.

The Al content (e.g., amount) included in the second particle PTC2 may be about 0 mol% to about 5 mol% based on 100 mol% of transition metals (e.g., all metals excluding lithium) in the compound represented by Chemical Formula 2. The Al content (e.g., amount) included in the second particle PTC2 may be, for example, about 0.01 mol% or more, or about 0.1 mol% or more. The Al content (e.g., amount) included in the second particle PTC2 may be, for example, about 1 mol% or less.

The positive electrode active material according to one or more embodiments of the disclosure will be explained in more detail with reference to FIG. 6. The positive electrode active material of the disclosure may include first particles PTC1' and second particles PTC2. The first particles PTC1' and the second particles PTC2 in the positive electrode active material may be mixed in a weight ratio of about 90:10 to about 60:40. For example, the first particles PTC1' and the second particles PTC2 in the positive electrode active material may be mixed in a weight ratio of about 80:20 to about 70:30. If the mixing ratio of the first particles PTC1' and the second particles PTC2 in the positive electrode active material is within these ranges, the pellet density of the positive electrode active material may increase, lifetime characteristics at a high voltage and high temperature may be excellent or suitable, and capacity per volume may increase.

In one or more embodiments, the mixing ratio of the first particles PTC1' and the second particles PTC2 may be controlled or selected so that the Mn content (e.g., amount) of Chemical Formula 2 becomes equal to or greater than the Mn content (e.g., amount) of Chemical Formula 1 based on 100 mol% of transition metals in the first and second particles. In one or more embodiments, the Mn content (e.g., amount) of Chemical Formula 2 may be about 1.5 times the Mn content (e.g., amount) of Chemical Formula 1. Within these ranges, though charging and discharging are repeated at a high voltage, the positive electrode active material may maintain a very stable structure, and capacity, resistance and lifetime characteristics at room temperature and at high temperature may all be improved. In one or more embodiments, the Mn content (e.g., amount) of Chemical Formula 2 may be about 5 times or less the Mn content (e.g., amount) of Chemical Formula 1 (e.g. 1 to 5 times an amount of Mn from Chemical Formula 1 in mol%, based on 100 mol% of transition metals in the first particle and the second particle). In one or more embodiments, the amount of Mn from Chemical Formula 2 in mol% may be 1.5 to 2.5 times the amount of Mn from Chemical Formula 1 in mol%, based on 100 mol% of transition metals in the first particle and the second particle.

In one or more embodiments, the mixing ratio of the first particles PTC1' and the second particles PTC2 may be controlled or selected so that the Mn content (e.g., amount) of Chemical Formula 1 is equal to or greater than the Co content (e.g., amount) of Chemical Formula 2 based on 100 mol% of transition metals in the first and second particles. Within this range, though charging and discharging are repeated at a high voltage, the positive electrode active material may maintain a very stable structure, and capacity, resistance and lifetime characteristics at room temperature/high temperature all may be improved. In one or more embodiments, the Mn content (e.g., amount) of Chemical Formula 1 may be about 5 times or less the Co content (e.g., amount) of Chemical Formula 2. In one or more embodiments, the amount of Mn from Chemical Formula 1 in mol% may be 1 to 5 times an amount of Co from Chemical Formula 2 in mol%, based on 100 mol% of transition metals in the first particle and the second particle.

**Method for Preparing Positive Electrode Active Material**

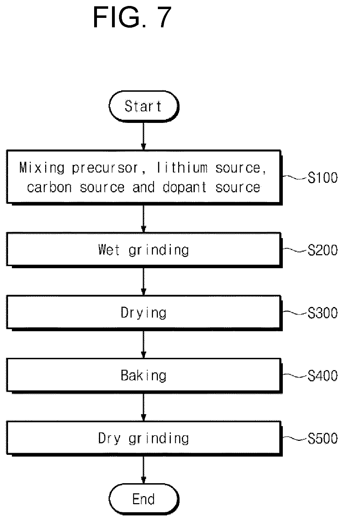

FIG. 7 is a flowchart for explaining a method for preparing a positive electrode active material according to one or more embodiments of the disclosure. A method for preparing the first particles PTC1' according to one or more embodiments of the disclosure will be explained in more detail with reference to FIG. 7.

A manganese iron phosphate precursor, a lithium source, a carbon source and a dopant source may be added to a solvent and mixed (S100). For example, the solvent may be water, ethanol and/or the like. The manganese iron phosphate precursor may be a compound containing manganese (Mn), iron (Fe) and phosphorus (P) simultaneously, and/or a (e.g., any suitable) mixture of a compound containing manganese (Mn) and a compound containing iron (Fe) and phosphorus (P), or a mixture of a compound including manganese (Mn), a compound including iron (Fe) and a compound including phosphorus (P). For example, the manganese iron phosphate precursor may include: $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$ and $H_3PO_4$. Here, x may be about 0.5 to about 0.9 or about 0.1 to about 0.2.

The lithium source may include at least one selected from among (e.g., selected from the group consisting of) lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

The carbon source may include at least one selected from among (e.g., selected from the group consisting of) glucose, sucrose, fructose, cellulose, starch, citric acid, polyacrylic acid, polyethylene glycol, and dopamine.

The dopant source may include an oxide containing a dopant metal and/or a chloride containing a dopant metal. For example, the dopant source may include at least one of the oxide or chloride of Mn of Chemical Formula 1, and at least one of the oxide of Ti or the chloride of Ti. For example, the dopant source may include at least one of the oxide of Mn or chloride of Mn, and at least one of the oxide of Ti or the chloride of Ti.

The mixture may be subjected to wet grinding (S200). The wet grinding may be performed using a suitable (e.g., common) wet mill capable of controlling temperature. For example, the wet grinding may use at least one selected from among (e.g., selected from the group consisting of) a bead mill, ball mill, attrition mill, apex mill, super mill and basket mill. Through the wet grinding process, the particles in the mixture may be ground to a fine size.

In one or more embodiments of the disclosure, the wet grinding (S200) may not be provided. For example, in order to maximize or increase the average particle diameter of the first particles PTC1' to be finally prepared, the wet grinding (S200) with respect to precursor particles may not be provided.

A dried mixture may be formed by removing the solvent from the mixture (S300).

The formation of the dried mixture may include performing a direct evaporation method with respect to (e.g., on) the mixture. For example, the direct evaporation method may include static drying or spray drying.

The spray drying for forming the dried mixture may include performing spray drying of the mixture. The spray drying may use a suitable (e.g., commonly) used spray drying device. For example, the spray drying may use at least one selected from among an ultrasonic spray drying device, an air nozzle spray drying device, an ultrasonic nozzle spray drying device, a filter expansion droplet generation device and a static spray drying device.

Fine particles in the size of the primary particles by the wet grinding process may be agglomerated with each other through the spray drying process to form secondary particles. Accordingly, by controlling the flow amount, flow rate, temperature, and retention time in the reactor of the carrier gas, and controlling internal pressure in the spray drying process, the first particles PTC1' may be formed into a secondary particle form with a desired or suitable size.

In one or more embodiments, the mixture that is a target for spray drying may have the total solid content (e.g., amount) of about 20% to about 40%. The total solid content (e.g., amount) may refer to a converted percentage value of the weight of solid materials (i.e., dried mixture) remaining after evaporating the solvent on the basis of the total weight of the mixture prior to drying (i.e., the spray solution). In one or more embodiments, the spray solution may have the total solid content (e.g., amount) of about 30 wt%.

If total the solid content (e.g., amount) is less than about 20%, the average particle diameter of the first particles PTC1' may decrease, and the productivity may be reduced. If the total solid content (e.g., amount) is greater than about 40%, the control of the average particle diameter of the first particles PTC1' may become difficult, and the deviation (e.g., non-uniformity) in the size of the first particles PTC1' may increase.

The spray solution according to this embodiment may have a viscosity at 25 °C of about 1500 mPa·s to about 2500 mPa·s with the above described total solid content (e.g., amount). For example, the spray solution may have a viscosity of about 2000 mPa·s.

In one or more embodiments, the injection amount (e.g., input rate) of the spray drying may be about 0.1 kg/min to about 0.9 kg/min. The injection amount of the spray drying may be defined as the weight of the solid content (e.g., amount) in a spray solution injected per hour. For example, if about 1 kg spray solution with the solid content (e.g., amount) of about 20% is injected for about 1 minute, the injection amount may be about 0.2 kg/min. In one or more embodiments, the injection amount for the spry drying may be about 0.5 kg/min.

In one or more embodiments, the spray drying may be performed at a temperature of about 100 °C to about 300 °C. For example, the spray drying may be performed at a temperature of about 200 °C to about 300 °C, greater than about 200 °C to about 300 °C, or about 230 °C to about 270 °C. The spray gas (for example, air) used in the spray drying may be injected at a first temperature and exhausted (e.g., discharged) at a second temperature. For example, the first temperature may be about 200 °C to about 250° C. The second temperature may be about 80 °C to about 150 °C.

The injection pressure of the spray solution may be about 0.3 MPa to about 0.7 MPa. For example, the injection pressure of the spray solution may be about 0.5 MPa.

If the injection amount, injection pressure and temperature of the spray drying satisfy the above-described ranges, the first particles PTC1' may have a spherical shape and a desired or suitable porosity.

The flow rate of the spray solution in the spray drying may be about 30 mL/min to about 80 mL/min. If the flow rate is less than about 30 mL/min, nozzle blocking phenomenon may occur and productivity may be reduced. If the flow rate is greater than about 80 mL/min, incomplete drying of the mixture may occur due to moisture condensation in a spray drier.

The injection pressure of the spray solution may be about 0.3 MPa to about 0.7 MPa. For example, the injection pressure of the spray solution may be about 0.5 MPa.

The dried mixture may be baked under an inert atmosphere (S400). The inert atmosphere may be a nitrogen atmosphere and/or an argon atmosphere. The temperature of the baking process may be about 500 °C to about 1000 °C, or about 600 °C to about 800 °C. The performance time of the baking process may be about 4 hours to about 20 hours, or about 6 hours to about 12 hours. Through the baking of the dried mixture, the first particles PTC1' including the compound represented by Chemical Formula 1 may be formed.

In the method for preparing the first particles PTC1' according to one or more embodiments the disclosure, a carbon source may be introduced into an iron phosphate precursor, and a carbon coating layer may be uniformly (e.g., substantially uniformly) formed on the surface of the primary particle. Then, the primary particles may be closely agglomerated through the spray drying to form dense secondary spherical particles. As a result, the first particle PTC1' may include a stable carbon coating layer on both the outside and the inside of the first particle PTC1', and thus may have a relatively high carbon content (e.g., amount). That is, the first particle PTC1' in a secondary particle form may include the stable carbon coating layer both on the outer surface of the secondary particle and on the surface of the primary particles, which forms the inside of the secondary particle of the first particle PTC1'. The conductivity of the positive electrode active material layer AML1 may be improved through the high carbon content (e.g., amount) of the first particle PTC1' in FIG. 6.

A method for preparing the second particles PTC2 according to one or more embodiments of the disclosure will be explained in more detail. A nickel-based precursor may be prepared. The nickel-based precursor may include Ni of Chemical Formula 2. The Ni content (e.g., amount) may be greater than or equal to about 50 atomic percentage (at%) on the basis of the total content (e.g., atomic amount) of metals in the nickel-based precursor. In one or more embodiments, the nickel-based precursor may further include Co and Mn.

In one or more embodiments, the nickel-based precursor may be obtained through a co-precipitation method. For example, the co-precipitation method may include dissolving a transition metal raw material in a solvent such as distilled water, and continuously adding a solution of a transition metal salt together with a chelating agent and an alkaline aqueous solution to a reactor to cause precipitation. After collecting the precipitate in a slurry type (kind), the slurry solution may be filtered and dried to obtain a nickel-based precursor that is a metal composite oxide.

In the disclosure, the transition metal raw material may include a metal salt of Ni. The transition metal raw material may further include at least one salt of a metal from among Co and Mn. The metal salt may include a sulfate, a nitrate, an acetate, a halide, a hydroxide and/or the like, and any suitable one may be used as long as it is soluble in a solvent, without limitation. The transition metal raw material according to one or more embodiments may include a nickel salt, a cobalt salt and a manganese salt. The transition metal raw material may be blended by controlling the molar ratio so that the nickel-based precursor has the Ni content (e.g., amount) of about 50 at% or more.

The nickel-based precursor and a lithium source may be mixed in a certain ratio to form a mixture. For example, the nickel-based precursor and the lithium source may be mixed in a molar ratio of about 1:1. The lithium source may include at least one selected from among (e.g., selected from the group consisting of) lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

By removing the solvent from the mixture, a dried mixture may be formed. The dried mixture may be baked. The temperature of a baking process may be about 700 °C to about 1000 °C or about 900 °C to about 1000 °C. The baking process may be performed under an oxidizing atmosphere such as air and/or oxygen. The heating time of the baking process may be about 10 hours to about 30 hours. In one or more embodiments of the disclosure, a preliminary baking may be further performed at about 150 °C to about 800 °C prior to the baking process.

In one or more embodiments of the disclosure, the baking process may be performed after additionally adding a melting agent to the mixture. The melting agent may be a compound containing at least one metal selected from among (e.g., selected from the group consisting of) Zr, La, S and Nb. By using the melting agent, the second particle PTC2 may be smoothly formed into a single particle form. In addition, the average particle diameter of the second particles PTC2 may increase.

Through the baking process, second particles PTC2 may be formed from the mixture containing the nickel-based precursor and the lithium source. A grinding process may be performed with respect to the synthesized second particles PTC2.

A coating process may be performed with respect to the ground second particles PTC2. For example, the second particles PTC2 and a coating raw material may be added to a solvent and mixed. For example, the coating raw material may include boron and/or aluminium. After filtering and drying the second particles PTC2, surface treatment may be performed on the second particles PTC2. The surface treatment may include a heating process under an oxidizing atmosphere such as air and/or oxygen. The surface treatment may be performed at a temperature of about 500 °C to about 800 °C.

In one or more embodiments of the disclosure, the coating process may include a dry coating process. For example, the second particles PTC2 and the coating raw material may be put in a dry coating device and mixed by stirring without a solvent. The surface treatment may be performed with respect to the dried mixture obtained.

By mixing the first particles PTC1' and the second particles PTC2, respectively prepared by the above-described methods, the positive electrode active material according to the disclosure may be prepared. The first particles PTC1' and the second particles PTC2 may be included. The first particles PTC1' and the second particles PTC2 may be mixed in a weight ratio of about 90:10 to about 60:40. For example, the first particles PTC1' and the second particles PTC2 may be mixed in a weight ratio of about 80:20 to about 70:30.

Carbon element analysis according to one or more embodiments of the disclosure may be performed by an Elementar Micro Cube elemental analyzer. The operation method and conditions are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide was detected using a thermal conductivity detector (TCD) detector.

In the method for measuring the carbon content (e.g., amount) according to one or more embodiments of the disclosure, scanning electron microscopy-energy dispersive X-ray spectroscopy (SEM-EDS) was performed with respect to the surface of the particles, and quantitative analysis was performed. As the method for measuring the carbon content (e.g., amount), an inductively coupled plasma-mass spectrometry (ICP-MS), an inductively coupled plasma optical emission spectroscopy (ICP-OES) and/or the like may be used in addition to the SEM-EDS.

Hereinafter, the disclosure will be explained in more detail through Examples. However, the Examples are only illustrations for explaining the disclosure, and the scope of the disclosure is not limited to the Examples.

## Example 1- Preparation of First Particles (Comparative Example)

An iron phosphate precursor, lithium carbonate and titanium dioxide were mixed in a molar ratio of about 1:1.03:0.004. To the mixture, 10 wt% of glucose was added. The mixture that was a slurry was spray dried under a spray pressure of about 0.5 MPa and at a temperature of about 230 °C for evaporation drying (e.g., to evaporate the solvents). The dried mixture was baked under a nitrogen atmosphere at about 750 °C for about 10 hours to obtain first particles in a secondary particle form. In this case, the average particle diameter of the first particles was about 3 $\mu$m to about 10 $\mu$m. The minimum particle diameter of the first particles was about 50 nm to about 150 nm. The Ti content (e.g., amount) was about 0.4 mol%, and the Fe content (e.g., amount) was about 99.6 mol% based on 100 mol% of transition metals (e.g., all metals excluding lithium) in the first particles.

## Example 2- Preparation of First Particles

A manganese iron phosphate precursor, lithium carbonate and titanium dioxide were mixed in a molar ratio of about 1:1.03:0.004. To the mixture, 10 wt% of glucose was added. The mixture that was a slurry was spray dried under a spray pressure of about 0.5 MPa and at a temperature of about 230 °C for evaporation drying (e.g., to evaporate the solvents). The dried mixture was baked under a nitrogen atmosphere at about 750 °C for about 10 hours to obtain first particles in a secondary particle form. In this case, the average particle diameter of the first particles was about 3 $\mu$m to about 10 $\mu$m. The minimum particle diameter of the first particles was about 50 nm to about 150 nm. The Ti content (e.g., amount) was about 0.4 mol%, the Fe content (e.g., amount) was about 84.6 mol% and the Mn content (e.g., amount) was about 15 mol% based on 100 mol% of transition metals (e.g., all metals excluding lithium) in the first particles.

In other words, Example 1 describes the preparation of first particles in a secondary particle form by mixing an iron phosphate precursor, lithium carbonate, and titanium dioxide in a specific molar ratio, adding glucose, and then spray drying the slurry at 230°C under 0.5 MPa pressure. The dried mixture is baked at 750 °C under a nitrogen atmosphere to obtain particles with an average diameter of 3 to 10 micrometers and a minimum diameter of 50 to 150 nanometers, containing 0.4 mol% Ti and 99.6 mol% Fe. Example 2 follows a similar process but uses a manganese iron phosphate precursor, resulting in particles with the same size range but with 0.4 mol% Ti, 84.6 mol% Fe, and 15 mol% Mn.

## Example 3: Preparation of Second Particles

A nickel-based precursor was prepared using a co-precipitation method. A nickel-based precursor and anhydrous lithium hydroxide were dry mixed using a Henschel mixer. A melting agent was additionally added to the mixture and heat treatment (i.e., baking process) was performed under an oxygen atmosphere at about 750 °C for about 15 hours to synthesize second particles as the nickel-based positive electrode active material. The second particles were ground using a Jet mill with a pressure of about 3 bars.

The second particles were added to distilled water and washed. Boron oxide and aluminium oxide corresponding to about 3 mol% based on the total 100 mol% of the transition metals of the second particles were added to perform boron aluminium coating. The second particles were dried at about 150 °C for about 12 hours and heated (i.e., surface treated) under an oxygen atmosphere at about 700 °C for about 15 hours.

The average particle diameter of the second particles was about 3 $\mu$m to about 5 $\mu$m. In this case, the minimum particle diameter of the second particles was about 200 nm to about 500 nm. The Mn content (e.g., amount) was about 29.85 mol%, the Al content (e.g., amount) was about 0.5 mol%, the Ni content (e.g., amount) was about 59.7 mol%, and the Co content (e.g., amount) was about 9.95 mol% based on 100 mol% of transition metals (e.g., all metals excluding lithium) in the second particles.

**Example 4: Preparation of Positive Electrode Active Material**

A positive electrode active material was prepared by mixing the first particles prepared in Example 2 and the second particles prepared in Example 3 in a weight ratio of about 9:1.

**Example 5: Preparation of Positive Electrode Active Material**

A positive electrode active material was prepared by mixing the first particles prepared in Example 2 and the second particles prepared in Example 3 in a weight ratio of about 8:2.

**Example 6: Preparation of Positive Electrode Active Material**

A positive electrode active material was prepared by mixing the first particles prepared in Example 2 and the second particles prepared in Example 3 in a weight ratio of about 7:3.

**Example 7: Preparation of Positive Electrode Active Material**

A positive electrode active material was prepared by mixing the first particles prepared in Example 2 and the second particles prepared in Example 3 in a weight ratio of about 6:4.

Table 1 shows the particle forms of the positive electrode active materials prepared in Examples 1 to 3, and the metal element contents based on 100 mol% of the transition metal content (e.g., amount) excluding lithium.

Table 1

| | | First particle (PTC1') | | |
|---|---|---|---|---|
| | Particle form | Metal element content (e.g., amount)* (mol%) | | |
| | | Ti | Fe | Mn |
| Example 1 | Secondary particle | 0.4 | 99.6 | ** |
| Example 2 | Secondary particle | 0.4 | 84.6 | 15 |
| | | Second particle (PTC2) | | |
| | Particle form | Metal element content (e.g., amount) (mol%) | | |
| | | Mn | Al | Ni | Co |
| Example 3 | Primary particle | 29.85 | 0.5 | 59.7 | 9.95 |

\* The metal element content (e.g., amount) was based on 100 mol% of transition metals (all metals excluding Li).
\*\* "-" refers to that it was not added during the preparation process.

Table 2 shows the mixing ratios (first particles: second particles) of the positive electrode active materials prepared in Examples 4 to 7, and the metal element contents based on 100 mol% of the transition metal content (e.g., amount) (all metals excluding lithium) in the positive electrode active materials that includes both the first particles and the second particles.

Table 2

| | Mixing ratio *** (PTC1':PTC2) | Metal element content (e.g., amount) (mol%) | | | | | |
|---|---|---|---|---|---|---|---|
| | | Ti | Fe | Mn | Al | Ni | Co |
| Example 4 | 9:1 | 0.36 | 76.14 | 16.485 | 0.05 | 5.97 | 0.995 |

(continued)

| | Mixing ratio *** (PTC1':PTC2 ) | Metal element content (e.g., amount) (mol%) | | | | | |
|---|---|---|---|---|---|---|---|
| | | Ti | Fe | Mn | Al | Ni | Co |
| Example 5 | 8:2 | 0.32 | 67.68 | 17.97 | 0.1 | 11.94 | 1.99 |
| Example 6 | 7:3 | 0.28 | 59.22 | 19.455 | 0.15 | 17.91 | 2.985 |
| Example 7 | 6:4 | 0.24 | 50.76 | 20.94 | 0.2 | 23.88 | 3.98 |
| *** The mixing ratio refers to the mixing ratio of the first particles PTC1' prepared in Example 2 and the second particles PTC2 prepared in Example 3 in a weight ratio. | | | | | | | |

**Manufacture of Positive Electrode**

95 wt% of the positive electrode active material prepared in each of Examples 1-7, 3 wt% of a polyvinylidene fluoride binder and 2 wt% of a Ketjenblack conductive material were mixed in an N-methylpyrrolidone solvent to prepare a positive electrode active material slurry. The positive electrode active material slurry was applied on an aluminium current collector, dried and rolled to manufacture a positive electrode.

**Fabrication of Rechargeable Lithium Battery**

A coin half-cell was formed by using the prepared positive electrode and a lithium metal counter electrode, interposing a polyethylene polypropylene multilayer separator therebetween, and injecting an electrolyte solution in which about 1.0 M $LiPF_6$ lithium salt was added to a mixture solvent of ethylene carbonate and diethyl carbonate in a volume ratio of about 50:50.

**Evaluation Example 1: Analysis on the Surface of Positive Electrode Active Material**

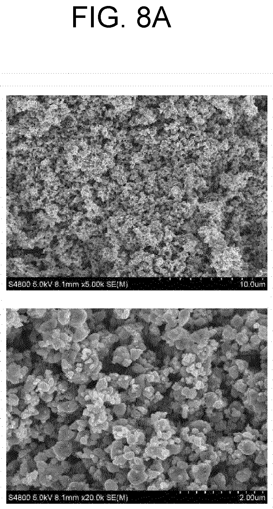

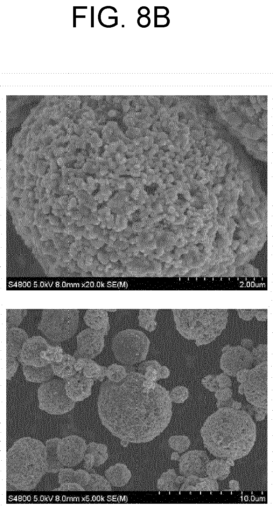

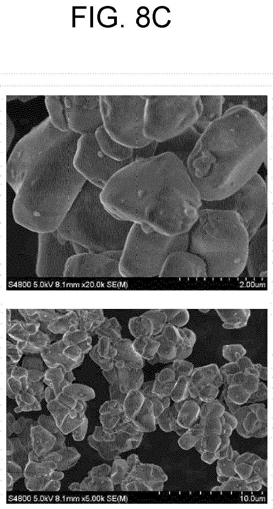

The scanning electron microscope (SEM) image of the first particles of the positive electrode active material prepared in Example 2 is shown in FIG. 8B. The SEM image of the second particles of the positive electrode active material prepared in Example 3 is shown in FIG. 8C. FIG. 8A is an SEM image of particles before secondary particle formation corresponding to Example 2. Referring to FIG. 8B, it can be confirmed that the first particles according to one or more embodiments of the disclosure have a spherical secondary particle form in which a plurality of primary particles are agglomerated. Referring to FIG. 8C, it can be confirmed that the second particles according to one or more embodiments of the disclosure have a single particle form or a cluster form in which a plurality of single particles are attached to each other with an irregular shape.

**Evaluation Example 2: Evaluation on Active Material**

The pellet density (PD) and capacity per volume (mAh/cc) of the positive electrode active materials of Examples 1 to 7 were measured, and the results are shown in Table 3.

Table 3

| | Powder | |
|---|---|---|
| | Pellet density (g/cc) | Capacity per volume (mAh/cc) |
| Example 1 | 2.5 | 394.6 |
| Example 2 | 2.46 | 375.2 |
| Example 3 | 3.1 | 608.5 |
| Example 4 | 2.53 | 396.9 |
| Example 5 | 2.62 | 422.5 |
| Example 6 | 2.75 | 455.5 |
| Example 7 | 2.72 | 462.5 |

Referring to Table 3, it can be confirmed that the positive electrode active materials according to Examples 4 to 7 of the disclosure have better pellet density compared to the positive electrode active materials of Examples 1 and 2. In addition, it can be confirmed that the positive electrode active materials according to Examples 4 to 7 of the disclosure have higher capacity per volume compared to the positive electrode active materials of Examples 1 and 2.

**Evaluation Example** 3: **Evaluation of Room Temperature Properties**

The lithium secondary batteries fabricated using the positive electrode active materials prepared in Examples 1 to 7 were charged with a constant current of about 0.2 C at about 25 °C to an upper limit voltage of about 4.45 V, and then discharged with about 0.2 C to a final discharge voltage of about 3.0 V to measure an initial discharge capacity, and in this case, the ratio of discharge capacity to charge capacity was calculated as efficiency, and the results are shown in Table 4.

**Evaluation Example 4: Evaluation of Low Temperature Properties**

The batteries that underwent the initial charging and discharging in Evaluation Example 3 above were subjected to a charging and discharging experiment at about -20 °C to measure discharge capacity, and the ratio of the discharge capacity at about -20 °C to the initial discharge capacity was evaluated as low temperature lifetime characteristics, and the results are shown in Table 4.

**Evaluation Example 5: Evaluation of Lifetime Characteristics**

The lithium secondary batteries fabricated using the positive electrode active materials prepared in Examples 1 to 7 were repeatedly charged and discharged 50 times in substantially the same manner as in Evaluation Example 3, the discharge capacity at the $50^{th}$ was measured, and the ratio of the discharge capacity at the $50^{th}$ compared to the initial discharge capacity was evaluated. The results are shown in Table 4.

Table 4

| | Room temperature property evaluation | | | Low temperature property evaluation | | Lifetime characteristics (%, @50cy) |
|---|---|---|---|---|---|---|
| | Charge (mAh/g) | Discharge (mAh/g) | Efficien cy (%) | Discharg e (mAh/g) | Efficien cy (%) | |
| Example 1 | 165.7 | 161.1 | 97.2 | 87 | 54 | 97.2 |
| Example 2 | 159.2 | 152.5 | 95.8 | 102 | 66.89 | 96 |
| Example 3 | 221.3 | 196.3 | 88.7 | 65 | 33.11 | 98.4 |
| Example 4 | 165.4 | 156.9 | 95.1 | 98.3 | 62.65 | 96.4 |
| Example 5 | 171.6 | 161.3 | 94.4 | 94.6 | 58.65 | 97.2 |
| Example 6 | 177.8 | 165.6 | 93.7 | 90.9 | 54.89 | 98.1 |
| Example 7 | 184 | 170 | 93 | 87.2 | 51.29 | 97 |

Referring to Tables 3 and 4, it can be observed that Example 2 has excellent or suitable low temperature properties but degraded pellet density, capacity per volume and room temperature properties compared to Example 1. It can be observed that, compared to Examples 1 and 2, Example 3 has excellent or suitable pellet density and capacity per volume, but the charge and discharge efficiency at room temperature is less than about 90%, and the efficiency of low temperature property evaluation is about 33.11%, and exhibits markedly degraded low temperature properties.

In one or more embodiments, it can be observed that Examples 4 to 7 exhibit higher pellet density and capacity per volume compared to Examples 1 and 2. For example, Examples 5 to 7 exhibit high capacity per volume of about 420 mAh/cc or more. In addition, Examples 4 to 7 exhibit excellent or suitable results of high efficiency of about 90% or more according to room temperature property evaluation and high efficiency of about 50% or more according to low temperature property evaluation.

A positive electrode active material according to the disclosure may have improved mixture density, capacity and energy density. A positive electrode active material layer according to the disclosure may be smoothly attached to a positive electrode current collector even with a relatively small amount of a binder.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a suitable method, for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, target particles are distributed in a dispersion solvent, introduced into a laser scattering particle size measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. Also, unless otherwise defined, in the present disclosure, the term "diameter" or "size" refers to an average diameter if (e.g., when) particles or crystallites are spherical and refers to an average major axis length if (e.g., when) particles or crystallites are non-spherical.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the disclosure have been described, it is understood that the disclosure should not be limited to these embodiments but one or more suitable changes and modifications can be made by one of ordinary skilled in the art within the scope of the disclosure as recited in the claims and equivalents thereof.

Embodiments are set out in the following clauses:

Clause 1. A method comprising:

preparing first particles;
preparing second particles; and
mixing the first particles and the second particles in a weight ratio of about 90:10 to about 60:40,
wherein the preparing of the first particles comprises:

adding a manganese iron phosphate precursor, a lithium source, a carbon source and a dopant source to a solvent and mixing to form a first mixture;

drying the first mixture by spray drying to form a dried first mixture; and

baking the dried first mixture, and

the preparing of the second particles comprises:

adding a nickel-based precursor and a lithium source to a solvent and mixing to prepare a second mixture;
removing the solvent from the second mixture and drying to form a dried second mixture; and
baking the dried second mixture,
wherein the method is a method for preparing a positive electrode active material.

Clause 2. The method of clause 1, wherein the spray drying comprises agglomerating particles in the first mixture to form secondary particles.

Clause 3. The method of clause 1 or clause 2, wherein in the spray drying, the first mixture utilized as a spray solution has a solid content of about 20 wt% to about 40 wt%, and a viscosity of about 1500 mPa·s to about 2500 mPa·s.

Clause 4. The method of any one of clauses 1 to 3, wherein an amount of Mn by mol% contained in the second mixture is 1 to 5 times an amount of Mn by mol% in the first mixture, based on 100 mol% of transition metals in the first particles and the second particles.

Clause 5. The method of any one of clauses 1 to 4, wherein an amount of Mn by mol% contained in the first mixture is 1 to 5 times an amount of Co by mol% contained in the second mixture, based on 100 mol% of transition metals in the first particles and the second particles.

**Claims**

1. A positive electrode active material, comprising:

a first particle comprising a compound represented by Chemical Formula 1; and
a second particle comprising a compound represented by Chemical Formula 2:

Chemical Formula 1 $\qquad$ $Li_{a1}Mn_{x1}Fe_{y1}M_{z1}PO_{4-b1}$,

in Chemical Formula 1, $0.8 \leq a1 \leq 1.2$, $0.1 \leq x1 \leq 0.2$, $0.8 < y1 \leq 0.9$, $0.001 \leq z1 \leq 0.05$, $0 \leq b1 \leq 0.05$, $x1 + y1 + z1 = 1$, and M is at least one element selected from the group consisting of transition metals having an oxidation number of 4,

Chemical Formula 2 $\qquad$ $Li_{a2}Ni_{x2}Co_{y2}Mn_{z2}X_{c2}O_{2-b2}$,

in Chemical Formula 2, $0.8 \leq a2 \leq 1.2$, $0.5 \leq x2 \leq 0.8$, $0 < y2 \leq 0.3$, $0.1 \leq z2 \leq 0.5$, $0 < c2 \leq 0.05$, $0 \leq b2 \leq 0.05$, $x2 + y2 + z2 + c2 = 1$, and X is at least one element selected from the group consisting of Al, Ti, Mg, Zr, Mo and Nb,
wherein in the positive electrode active material, an amount of Mn from Chemical Formula 2 in mol% is 1 to 5 times an amount of Mn from Chemical Formula 1 in mol%, based on 100 mol% of transition metals in the first particle and the second particle.

2. The positive electrode active material as claimed in claim 1, wherein the amount of Mn from Chemical Formula 2 in mol% is 1.5 to 2.5 times the amount of Mn from Chemical Formula 1 in mol%, based on 100 mol% of transition metals in the first particle and the second particle.

3. The positive electrode active material as claimed in claim 1 or claim 2, wherein the amount of Mn from Chemical Formula 1 in mol% is 1 to 5 times an amount of Co from Chemical Formula 2 in mol%, based on 100 mol% of transition metals in the first particle and the second particle.

4. The positive electrode active material as claimed in any one of claims 1 to 3, wherein the first particle has a polycrystal form.

5. The positive electrode active material as claimed in claim 4, wherein the first particle comprises a plurality of first primary particles that are agglomerated with each other.

6. The positive electrode active material as claimed in claim 4 or claim 5, wherein an average particle diameter of the first particle is about 3 μm to about 10 μm.

7. The positive electrode active material as claimed in any one of claims 4 to 6, wherein a minimum particle diameter of the first particle is about 50 nm to about 150 nm.

8. The positive electrode active material as claimed in any one of claims 1 to 7,

   wherein M is a dopant doped in the first particle, and
   M is Ti.

9. The positive electrode active material as claimed in any one of claims 1 to 8, wherein a span value of the first particle, analyzed by a particle size analyzer, is about 0.3 to about 0.75.

10. The positive electrode active material as claimed in any one of claims 1 to 9, wherein a porosity of the first particle is about 20% to about 30%.

11. The positive electrode active material as claimed in any one of claims 1 to 10, wherein the second particle is in a single particle form.

12. The positive electrode active material as claimed in claim 11, wherein an average particle diameter of the second particle is about 3 μm to about 5 μm.

13. The positive electrode active material as claimed in claim 11 or claim 12, wherein a minimum particle diameter of the second particle is about 200 nm to about 500 nm.

14. The positive electrode active material as claimed in any one of claims 1 to 13, wherein a weight ratio between the first particle and the second particle is about 90:10 to about 60:40.

15. A method comprising:

   preparing first particles;
   preparing second particles; and
   mixing the first particles and the second particles in a weight ratio of about 90:10 to about 60:40,
   wherein the preparing of the first particles comprises:

      adding a manganese iron phosphate precursor, a lithium source, a carbon source and a dopant source to a solvent and mixing to form a first mixture;
      drying the first mixture by spray drying to form a dried first mixture; and
      baking the dried first mixture, and
      the preparing of the second particles comprises:

   adding a nickel-based precursor and a lithium source to a solvent and mixing to prepare a second mixture;
   removing the solvent from the second mixture and drying to form a dried second mixture; and

baking the dried second mixture,
wherein the method is a method for preparing a positive electrode active material.

# FIG. 1

COL1 AML1  30  COL2 AML2

10      20

ELL

# FIG. 2

FIG. 3

# FIG. 4

# FIG. 5

# FIG. 6

# FIG. 7

Start

→ Mixing precursor, lithium source, carbon source and dopant source — S100

→ Wet grinding — S200

→ Drying — S300

→ Baking — S400

→ Dry grinding — S500

End

FIG. 8A

# FIG. 8B

# FIG. 8C

Europäisches
Patentamt

European
Patent Office

Office européen
des brevets

# EUROPEAN SEARCH REPORT

**Application Number**

EP 25 17 1777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 504 961 A (JIANGSU YAONING NEW ENERGY INNOVATION TECH CO LTD) 28 July 2023 (2023-07-28) * claims 1-10 * * examples 1-8 * ----- | 1-15 | INV. $H01M4/36$ $H01M4/13$ $H01M4/505$ $H01M4/525$ $H01M10/0525$ |
| A | ZHAO XINXIN ET AL: "LiNi 0.5 Co 0.2 Mn 0.3 O 2 -LiMn 0.6 Fe 0.4 PO 4 Mixture with Both Excellent Electrochemical Performance and Low Cost as Cathode Material for Power Lithium Ion Batteries", JOURNAL OF THE ELECTROCHEMICAL SOCIETY, vol. 165, no. 2, 1 January 2018 (2018-01-01), pages A142-A148, XP055897273, ISSN: 0013-4651, DOI: 10.1149/2.0431802jes * the whole document * ----- | 1-15 | $H01M4/02$ |

**TECHNICAL FIELDS SEARCHED (IPC)**

H01M

The present search report has been drawn up for all claims

| Place of search | Date of completion of the search | Examiner |
|---|---|---|
| Munich | 27 September 2025 | Kuhn, Tanja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1777

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2025

| Patent document cited in search report | Publication date | Patent family member(s) | Publication date |
|---|---|---|---|
| CN 116504961 A | 28-07-2023 | NONE | |

EPO FORM P0459

For more details about this annex : see Official Journal of the European Patent Office, No. 12/82